# EUROPÄISCHE PATENTANMELDUNG

(11) **EP 0 769 747 A1**
(43) Veröffentlichungstag der Anmeldung: **23.04.1997**
(21) Anmeldenummer: 96115070.3
(22) Anmeldetag: 19.09.1996
(51) Int. Cl.: G06F 13/38, G06K 7/08

(54) **Magnetkartenleser-Schnittstelleneinrichtung**

(30) Priorität: 19.09.1995 DE 19534747
(71) Anmelder: wellcom GmbH, 81379 München (DE)
(72) Erfinder: Beedel, Peter, 82538 Geretsried (DE)
(74) Vertreter: Feldkamp, Rainer, Dipl.-Ing.

(57) **Zusammenfassung**

Eine Magnetkartenleser-Schnittstellenschaltung (1) zum Anschluß eines Magnetkartenlesers an einen Hauptcomputer weist mindestens einen Bus-Anschluß (2, 3) zum Anschluß eines Magnetkartenlesers (4, 5) und Wandlereinrichtungen zur Umwandlung der Signale auf dem zumindestens einen Bus-Anschluß auf serielle Signale und umgekehrt auf, wobei der serielle Anschluß (6) mit dem Hauptcomputer verbunden ist.

## Beschreibung

Die Erfindung bezieht sich auf eine Magnetkartenleser-Schnittstelleneinrichtung zum Anschluß eines Magnetkartenlesers an einen Computer der im Oberbegriff des Anspruchs 1 genannten Art.

In der US-Patentschrift 5,331,138 ist ein Kartenleser beschrieben, der über eine Anschlußleitung mit einem Hostcomputer verbunden wird und der zur Verwendung mit verschiedenen Kartenar ten, wie beispielsweise Magnet- oder Chipkarten ausgebildet ist.

Aus der DE 94 05 280 U1 ist ein portables Chipkartenlesegerät bekannt, das eine serielle Schnittstelle zum Anschluß an einen Computer aufweist und das kein eigenes Netzteil erfordert.

Aus der US-Patentschrift 5,184,282 ist ein für den Anschluß an einen Computer vorgesehener Adapter bekannt, in den mehrere Chipkarten einsteckbar sind.

Magnetkartenleser werden von einer Vielzahl von Herstellern geliefert, wobei der Anschluß dieser Magnetkartenleser an einen Computer zur Übertragung von Daten von dem Magnetkartenleser zum Computer und umgekehrt über einen Bus erfolgt, der herstellerspezifisch ist.

Daher muß der Anschluß des Magnetkartenlesers an einen Computer unter Berücksichtigung der Eigenschaften der Bus-Spezifikationen des Kartenlesers erfolgen, so daß der Wechsel von einem Magnetkartenleser zum anderen ein erhebliches Problem darstellt. Andererseits weisen Magenetkartenleser sehr unterschiedliche Leistungsmerkmale auf, so daß es erwünscht ist, den Anschluß des Magnetkartenlesers an einen Computer zu vereinfachen.

Der Erfindung liegt daher die Aufgaben zugrunde, eine Magnetkartenleser-Schnittstellenschaltung der eingangs genannten Art zu schaffen, die einen universellen Anschluß beliebiger Arten von Magnetkartenlesern an einen Computer in einfacher Weise ermöglicht.

Diese Aufgabe wird durch die im Patentanspruch 1 angegebenen Merkmale gelöst.

Vorteilhafte Ausgestaltungen und Weiterbildungen der Erfindung ergeben sich aus den Unteransprüchen.

Durch die erfindungsgemäße Ausgestaltung der Magnetkartenleser-Schnittstellenschaltung, ist es möglich, beliebige Arten von Magnetkartenlesern einzusetzen, ohne daß die Anschlußmöglichkeiten an dem Computer selbst geändert werden müssen.

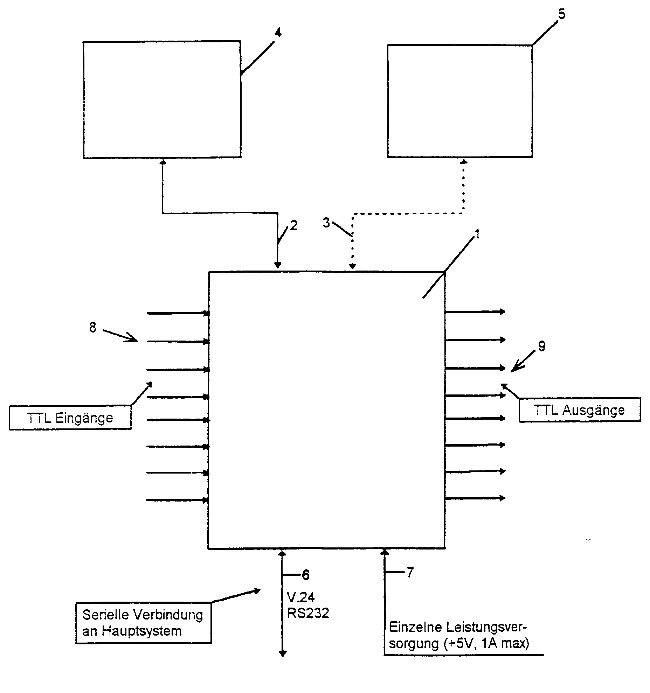

Die Erfindung wird im folgenden anhand eines in der Zeichnung dargestellten Ausführungsbeispiels noch näher erläutert.

In der Zeichnung ist eine Magnetkartenleser-Schnittstellenschaltung 1 dargestellt, die zumindestens einen Busanschluß 2, 3 für den Anschluß eines Magnetkartenlesers 4 bzw. 5 aufweist, wobei dieser Busanschluß 2 bzw. 3 in spezifischer Weise an den Typ des Magnetkartenlesers 4 bzw. 5 angepaßt ist. Es ist selbstverständlich möglich, die Schnittstellenschaltung 1 lediglich mit einem einzigen Magnetkartenleser-spezifischen Bus-Anschluß 2 oder mit mehr als zwei Magnetkartenleser-spezifischen Bus-Anschlüssen 2, 3 auszustatten, so daß die gleiche Schnittstellenschaltung für belibige Typen von Magnetkartenlesern verwendbar ist.

Die Schnittstellenschaltung 1 weist weiterhin einen seriellen Anschluß in Form einer seriellen Leitungsverbindung 6 auf, die beispielsweise nach dem V-24-Protokoll arbeitet, wobei derartige Schnittstellenverbindungen auch unter der Bezeichnung RS232 bekannt sind. Diese serielle Leitungsverbindung 6 stellt die Verbindung zwischen der Schnittstellenschaltung und dem Hauptcomputer her, dem die Daten von dem Magnetkartenleser 4 bzw. 5 zugeführt werden sollen bzw. der Signale an diesen Magnetkartenleser 4 bzw. 5 liefert.

Dadurch, daß die Schnittstellenschaltung 1 in jedem Fall Daten mit dem (nicht dargestellten) Hauptcomputer über eine serielle Leitungsverbindung 6 austauscht, ist der Anschluß beliebiger Magnetkartenleser an den Hauptcomputer ohne Änderung des Hauptcomputers selbst möglich, da die Schnittstellenschaltung 1 in jedem Fall die Umwandlung auf ein Standardformat für eine serielle Leitungsverbindung über den seriellen Anschluß 6 übernimmt.

Gemäß einer bevorzugten Ausgestaltung weist die Schnittstellenschaltung 1 weiterhin TTL-Eingänge 8 und TTL-Ausgänge 9 auf, die einerseits weitere Signale von dem Magnetkartenleser 4, 5 und/oder diesen zugeordneten Einrichtungen über die serielle Leitungsverbindung an den Hauptcomputer übertragen können bzw. andererseits von dem Hauptcomputer über die serielle Leitungsverbindung übertragene Steuersignale an dem Magnetkartenleser 4, 5 zugeordnete Einrichtungen übertragen können. Auf diese Weise ergeben sich zusätzliche Meß- und Steuermöglichkeiten der Magnetkartenleser 4,5 sowie damit verbundener Einrichtungen. Beispiele für derartige Steuer- und Meßsignale sind beispielsweise die Feststellung eines Einschiebens einer Karte in den Magnetkartenleser, die Steuerung des Auswurfs der Karte sowie die Übermittlung des Status des Magnetkartenlesers.

Weiterhin kann die Schnittstellenschaltung mit einer einzigen Leistungsversorgung verbunden sein und ihrerseits die Leistungsversorgung des Magnetkartenlesers übernehmen.

Die Schnittstellenschaltung ist vorzugsweise direkt an dem Magnetkartenleser befestigt oder zumindest in dessen Nähe angeordnet, so daß sich kurze Verbindungen für den Magnetkartenleser-Bus ergeben.

## Patentansprüche

1. Magnetkartenleser-Schnittstellenschaltung zum Anschluß eines Magnetkartenlesers an einen Hauptcomputer,
dadurch gekennzeichnet, daß die Schnittstellenschaltung (1) mindestens einen Bus-Anschluß (2, 3) zum Anschluß eines Magnetkartenlesers (4, 5) und Wandlereinrichtungen zur Umwandlung der Signale auf dem zumindestens einen Bus-Anschluß auf serielle Signale und umgekehrt aufweist, wobei der serielle Anschluß (6) mit dem Hauptcomputer verbunden ist.

2. Schnittstellenschaltung nach Anspruch 1,
dadurch gekennzeichnet, daß TTL-Eingänge (8) und/oder TTL-Ausgänge (9) zur Steuerung von Zusatzfunktionen bzw. zur Feststellung von Zuständen und Funktionen des Kartenlesers (4, 5) vorgesehen sind.

3. Schnittstellenschaltung nach einem der vorhergehenden Ansprüche,
dadurch gekennzeichnet, daß die Schnittstellenschaltung aus einer einzigen Leistungsversorgung (7) gespeist wird und ihrerseits die Leistungsversorgung des Kartenlesers (4, 5) steuert.

4. Schnittstellenschaltung nach einem der vorhergehenden Ansprüche, dadurch gekennzeichnet, das die Schnittstellenschaltung (1) an oder in der Nähe des Kartenlesers (4, 5) angeordnet ist.
